# EUROPEAN PATENT SPECIFICATION

(11) **EP 2 131 581 B1**
(45) Date of publication and mention of the grant of the patent: **14.11.2012**
(21) Application number: 09157981.3
(22) Date of filing: 15.04.2009
(51) Int. Cl.: H04N 5/775

(54) **Input Detection Device For Lower Stand-By Power Consumption**
Eingabeerfassungsvorichtung für niedrigeren Energieverbrauch im Bereitschaftsmodus
Dispositif de détection d'entrées pour diminuer la consommation électrique pendant la veille

(30) Priority: 02.06.2008 TR 200803992
(43) Date of publication of application: 09.12.2009
(73) Proprietor: Vestel Dijital Üretim Sanayi A.S., 45030 Manisa (TR)
(72) Inventor: Tüzün, Levent, 45030, Manisa (TR); Bal, Ertug, 45030, Manisa (TR)
(74) Representative: Cayli, Hülya

(56) References cited:
- EP-A2- 1 045 584
- CN-C- 100 337 475
- DE-A1- 3 231 581
- KR-A- 20010 065 860
- KR-A- 20070 121 316

## Description

### Field of The Invention

The present invention is concerned with decreasing power consumption within set top boxes (STBs) or similar consumer electronic devices such as PVRs or DVD players, having SCART (from Syndicat des Constructeurs d'Appareils Radiorécepteurs et Téléviseurs) Loop Through feature.

### Background of The Invention

Nowadays many electronic devices within consumer electronics are not only capable of switching the power supply on and off, but also capable of waiting at stand-by mode, where a very popular demand in consumer electronics is to reduce the power consumption of electronic devices at standby mode.

Generally standby mode is used for reduced power consumption where only components used for receiving user commands and performing requested operations are operated in order to wake set top box from standby state to open state upon user request. However, some set top boxes support more features in standby state, one of those features is to transmit data signals received from another data source.

Digital receivers (set-top boxes-STB) generally support one VCR SCART and a TV SCART interface. VCR SCART can be used for a recording device (i.e. video-cassette recorder) as output. It can also be used for an input from another set-top box, such like a DVD player.

When VCR SCART is used as "input" user may switch this input from VCR-in to TV SCART output of set-top box with a switching mechanism, so called "SCART Loop Through". In stand-by mode (since there is no internal audio-video generation) user always gets data related to external device audio-video information from TV SCART (if available).

In STB' s buffering, filtering and switching is maintained by separate circuits when an integrated SCART matrix is not used. This condition may require a more complex design; however it is easier to control inputs and outputs directly.

For both of schemes, all SCART input & output circuitry is run in either ON mode or in STBY mode because of the SCART Loop Through requirement. This implies extra power consumption if there is no input device.

A prior art system is disclosed in patent document EP 1 045 584 B1, where; a set top box is supplied by electricity of an external device if set top box is used for SCART Loop Through feature. However, the data buffer circuit within this patent document should always be in open active state, where a significant amount of energy is dissipated. Within the teaching of this technology it is also not possible to receive the image provided by set top box receiver where SCART Loop Through feature is enabled.

Another system is disclosed in the patent document KR 2001 0065860 in which several processing units exist to receive and process canal broadcast signals. The units are powered whenever a synchronization signal in the broadcast signal is detected and hence a reduction in power consumption when the device is active is obtained.

KR 2001 0065860 A discloses a VCR that is connected via a SCART loop through having two inputs one for a decoder box and another for a TV display. The VCR when in stand-by mode detects if a paid broadcast is being received from the decoder box is present on the SCART coming from the decoder. If there is no paid broadcast being received from the decoder box the VCR switches off the 12V power supply to the SCART slow switching pin of the SCART connector.

### Brief Summary of the Invention

There is a need of reducing stand-by power consumption rates of consumer electronics devices (such as set-top boxes, PVRs and DVD players) which has VCR Input with SCART Loop Through functionality by shutting down video buffer circuits in stand-by mode until an electronic consumer device is connected to the VCR SCART input, so that stand-by power consumption will be lower. Further, there is the need of avoiding wake-up system just for SCART Loop Through operation.

Embodiments of the present invention provide an electrical device and the corresponding method, the device having a first and second SCART inputs for connection to a first and second electrical device, said device (1) comprising a Power Supply Unit (8), an Audio and Video Switching Circuit section (4) and a Video Buffer and Filter section (5) to allow for SCART Loop Through functionality. The electrical consumer device (1) additionally comprises a VCR-input and power control section (7) to monitor the stand-by mode operation of said device (1) and the connection of the first electrical device, and switching means (X1) to switch off said Video Buffer and Filter section (5) when both conditions of Stand-by mode of said device (1) and lack of connection of the first electrical device are met at the same time.

According to a preferred embodiments of the invention the electrical device has a VCR-in and power control section which has switching means (X1) to allow transfer of power from said Power Supply Unit (8) to said Video Buffer and Filter section (5), whereby power is switched off when said two conditions of Stand-by mode and lack of connection of the second electrical device are met at the same time. The switching means may be a P-Channel MOSFET whose base is connected via resistors (R4 and R5) to the collectors of two switching NPN transistors (Q1 and Q2) whose emitters may be connected to ground and whose bases may be respectively connected to the first SCART input and to the

Stand-by signal (9) so that when said two conditions of Stand-by mode and lack of connection of the first electrical device are met at the same time, transistors Q1 and Q2

will be both switched off and switch X1 will be also off so that no power is supplied to said Video Buffer and Filter section (5). The presence of the first electrical appliance may be monitored using the Slow Blank signal available at pin 8 of the SCART connection to said first device.

Further preferred embodiments are described in the dependent claims.

### Brief Description of Drawings

Specific embodiments of the invention are now described with reference to the accompanying drawings wherein :
Figure 1 illustrates a typical connection arrangement between a STB device and external devices such as VCR and TV, with a block diagram of the STB including the inventive features of the present invention.
Figure 2 illustrates a detailed electrical circuit diagram of one exemplary embodiment of the invention.

### Description of the Invention

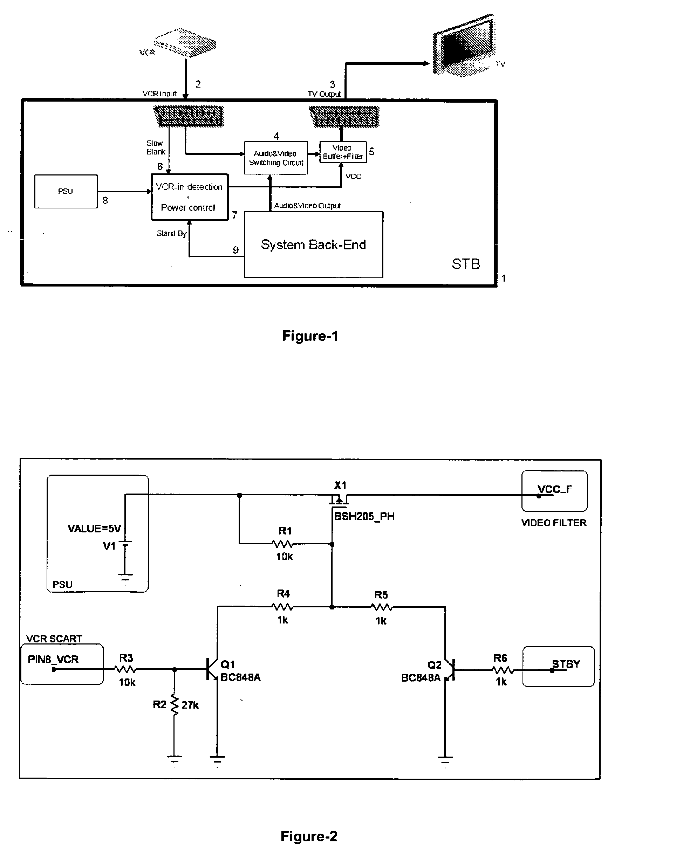

Figure 1 illustrates a block diagram of the claimed invention, wherein the indicated reference numbers in brackets are here described in their meaning and interfunctionality:
[1] The set-top box system which has a power supply (PSU), audio & video interfaces, and control units.
**[2]** An external device's audio & video signals are inputted via the VCR SCART input connection of the STB.
**[3]** The input signals from VCR SCART are transferred by switch circuit (4) to video buffer (5), note that signals are not buffered so they are not shown in the block diagram.
**[4]** Audio & Video signals taken from the System Back-End (internal) section and VCR input (external) are switched by a switching circuit (4). It is driven by system controller. In stand-by mode - since there is no internal audio & video - switching circuit works for VCR SCART input signals.
[5] Because of the need to conform to the voltage level specifications (from video interface ICs impedance differences) and noise coupling, a video buffer & filter circuit is used in video outputs of STBs.
**[6]** Slow Blank is a standard SCART Interface (pin#8) signal for detection of a connection and aspect ratio of transferred video.
**[7]** The invention is implemented by means of the VCR-in detection and Power control section (7). It receives Slow Blank and Stand-by signals and controls the power supply of the Video Buffer and Filter section (5). In the absence of both Slow Blank and STBY there is no power supply to the Video Buffer and Filter section (5), which case only happens in STBY mode and reduces STBY power consumption.
**[8]** PSU (power supply unit) can be any DC supply which is powering the Video Buffer and Filter section (5) via the Power Control section (7).
**[9]** System Back-End controller generates a STBY (standby) signal for indication of the state of the device for sub-blocks. This signal is active LOW in this case or absent for the operation of the invention.

A detailed embodiment of the invention is illustrated in Figure 2, where;
**X1, Q1** and **Q2** transistors are the main electronic components of the system:
   - **X1** is a P-Channel MOSFET (model no is BSH205).
   - **Q1&Q2** transistors are NPN BJT (model no is BC848).
   - **V1** is the power source for video filter supply and it is generated by PSU (power supply unit). **VCC_F** is the Video Filter Supply input.
Control signals are **PIN8_VCR** and STBY:
   - **PIN8_VCR** is VCR SCART pin#8 (Slow Blank). It may correspond to any DC value between 4.5V to 12V when an audio & video present in the VCR SCART. (according to SCART standards)
   - **STBY** signal is generated by system microprocessor (by an I/O port) and it is assumed to be logic HIGH when the system is running in ON mode and it will be logic LOW when it is in STBY mode. (It is considered that logic HIGH is minimum 2.5V DC in most digital systems.)

### CASE 1 (STB is ON)

When the Set-Top Box is in ON mode, **STBY** signal will be HIGH (-3.3V DC). Since the DC voltage on **R6** resistor would be bigger than threshold voltage of **Q2** transistor ( which is ~0.7V ). The transistor would run in "saturation" mode. So, the collector voltage of **Q2** will be around 0.1V. Then **R1** and **R5** will run like voltage divider resistors from **V1** ( = 5V ) to 0.1V. Consequently, there will be about 0.45V on the junction point of **R1** and **R5** which is connected to Gate of **X1** MOSFET.

If Gate-Source voltage (**V**_{GS}) of **X1** is lower than -1V (about -4.55V above case), then **X1** lets a current flow - which is enough to supply Video Filter Circuit - from its Source to Drain. In Figure-2 current flow will be from **V1** to **VCC_F. X1** has a low voltage drop on Source-Drain connection when current flow occurs, so **VCC_F** is almost equal to **V1.**

There is no dependence of **PIN8_VCR** signal, in this case because;
**a**. If **PIN8_VCR** is present it will have a DC value bigger than threshold voltage of **Q1** and the collector voltage will be about 0.1V similar to **Q2**. **R4** would be another voltage divider component but the Gate voltage of **X1** would be lower than -0.45V, so there would still present a current flow from PSU to Video Filter Supply.
**b**. If there is no input from **PIN8_VCR** (no connection) then **Q1** transistor will be OFF (can be considered as open circuit) and power control can only done by **Q2.**

### CASE 2 (STB is in Standby):

In this case **STBY** signal from microprocessor is logic LOW (near 0V DC) and **Q2** will be OFF. So there won't be any power control by **Q2**. Then **X1** is driven from only **Q1** transistor.
**a**. If there is no input in VCR SCART, **PIN8_VCR** will be open - no voltage will be present in **Q1** transistor's base - and **Q1** will be in OFF mode. Since there is no current flow through **R4** and **R5** resistors - there won't be any current flow on **R1** and it will maintain a virtually short circuit between **V1** and Gate of **X1.** This implies that V_{GS} is about 0V (not < -1V ), so there won't be any current flow from source to drain. That means **VCC_F** will not be supplied and there won't be power consumption on video filter circuits.
**b**. If there is a device connected on VCR SCART then **PIN8_VCR** will be >4.5V and **Q1** transistor will begin to run in Saturation mode. So, Gate voltage of **X1** will be around 0.45V (as above) and current flow through video filter would start.

Within the present invention, a set top box receiver having SCART Loop Thorough feature is disclosed; where a set top box operating at standby mode will disable components used for SCART Loop Through feature upon absence of an external device signal, where a significant amount of energy will be saved.

Advantageously upon prior art devices and methods is that the device and method according to the invention does not require a system wake-up just for SCART Loop Through operation. It can also be implemented by a simpler circuitry. It has the flexibility to match most of the 2- SCART designs.

By the addition of input detection and power control circuit according to the invention video buffers can be run or shut down depending on the device (ON/STBY) and external input (VCR SCART) status. Detection circuit may respond any of these conditions quickly since it is driven directly by Standby and Slow Blank signals.

## Claims

1. Electrical consumer device (1) having a first and second SCART inputs for connection to a first electrical device and second electrical device respectively, said electrical consumer device (1) comprising a Power Supply Unit (8), an Audio and Video Switching Circuit section (4) wherein said Audio and Video Switching Circuit section (4) transfers signals from said first SCART input to a Video Buffer and Filter section (5) which is a means for noise coupling and conforming to the voltage level specifications and is connected to said second SCART input to allow for SCART Loop Through functionality, said electrical consumer device (1) additionally comprising
- a VCR-input and power control section (7) which is means for monitoring the stand-by mode operation of said electrical consumer device (1) by monitoring a stand by signal of the electrical consumer device (1) and the connection of the first electrical device by monitoring a slow blank pin of the first SCART input, and
**characterized by**
- switching means (X1) which switches off said Video Buffer and Filter section (5) when said VCR-input and power control section (7) detects that said electrical consumer device (1) is in Stand-by mode and first electrical device is not connected to said SCART input and which switches on said Video Buffer and Filter section (5) when said VCR-input and power control section (7) detects that first electrical device is connected to said first SCART input.

2. Electrical device according to claim 1 wherein said electrical consumer device (1) is a set-top box (STB) or a DVD player or a Personal Video Recorder (PVR).

3. Electrical device according to claim 1 wherein said first electrical device is a Video-Cassette Recorder (VCR) or a DVD player and said second electrical device is a television set or equivalent apparatus.

4. Electrical device according to claims 1 to 3, wherein said VCR-in and power control section (7) has switching means (X1) to allow transfer of power from said Power Supply Unit (8) to said Video Buffer and Filter section (5), whereby power is switched off when said two conditions of Stand-by mode of said device (1) and lack of connection of the first electrical device are met at the same time.

5. Electrical device according to claims 4 wherein said switching means (X1) is a P-Channel MOSFET whose Base is connected via resistors (R4 and R5) to the collectors of two switching NPN transistors (Q1 and Q2) whose emitters is connected to ground and whose bases is respectively connected to the first SCART input and to the Stand-by signal (9) so that when said two conditions of Stand-by mode and lack of connection of the second electrical device are met at the same time Q1 and Q2 will be both switched off and X1 will be also switched off so that no power is supplied to said Video Buffer and Filter section (5).

6. Electrical device according to claims 1 to 5 wherein the presence of the first electrical device is monitored using the Slow Blank signal (6) available at pin 8 of the SCART connection to said first device.

7. A method for reducing power consumption of an electrical consumer device (1) having Loop Through feature and comprising a video buffer and filter section, which is means for noise coupling and conforming to the voltage level specifications, said electrical consumer device (1) having a first and a second SCART inputs for connection to a first and second electrical device respectively, comprising the steps of
- monitoring if said electrical consumer device in stand-by mode by monitoring a stand by signal of the electrical consumer device (1),
- monitoring if said first electrical device is connected to said electrical consumer device (1) by monitoring a slow blank pin of the first SCART input
- verifying the simultaneous presence of two conditions of a stand-by mode of said electrical device and lack of connection of the first electrical device and **characterized by** the steps of:
- if said electrical consumer device (1) is in Stand-by mode and first electrical device is not connected to said first SCART input at the same time, actuating a switching means to switch off power supply to said video buffer and filter section, to reduce the power consumption of said etectrical consumer device when in stand-by mode,
- if said first electrical device is connected to said first SCART input of said electrical consumer device (1) when said electrical consumer device (1) is in Stand-by mode, actuating said switching means to switch on power supply to said video buffer and filter section.

8. The device of claim 1, wherein said electrical consumer device (1) is a set-top box (STB) or a DVD player or a Personal Video Recorder (PVR) and said second electrical device is a television set or equivalent apparatus.

## Patentansprüche

1. Elektrische Verbrauchsvorrichtung (1) mit einem ersten und einem zweiten SCART-Eingang zur Verbindung mit einer ersten elektrischen Vorrichtung bzw. einer zweiten elektrischen Vorrichtung, wobei die elektrische
Verbrauchsvorrichtung (1) eine Energieversorgungseinheit (8) und einen Audio- und Videoschaltkreisabschnitt (4) umfasst, wobei der Audio- und Videoschaltkreisabschnitt (4) Signale von dem ersten SCART-Eingang an einen Videopuffer- und Filterabschnitt (5) überträgt, der ein Mittel zur Störsignalverbindung und -anpassung an Spannungspegelspezifikationen ist und
mit dem zweiten SCART-Eingang verbunden ist, um eine SCART-Durchschleiffunktionalität zu ermöglichen, wobei die elektrische Verbrauchsvorrichtung (1) zusätzlich umfasst:
- einen VCR-Eingangs- und Energiesteuerungsabschnitt (7) zum Überwachen des Standbybetriebs der elektrischen Verbrauchsvorrichtung (1) durch Überwachung eines Standbysignals der elektrischen Verbrauchsvorrichtung (1) sowie der Verbindung der ersten elektrischen Vorrichtung durch Überwachen eines langsamen Austastpins (slow blank pin) des ersten SCART-Eingangs,
- **gekennzeichnet durch** ein Schaltmittel (X1), das den Videopuffer- und Filterabschnitt (5) ausschaltet, wenn der VCR-Eingangs- und Energiesteuerungsabschnitt (7) feststellt, dass sich die elektrische Verbrauchsvorrichtung (1) im Standbymodus befindet, und die erste elektrische Vorrichtung nicht mit dem SCART-Eingang verbunden ist, und welches den Videopuffer- und Filterabschnitt (5) einschaltet, wenn der VCR-Eingangs- und Energiesteuerungsabschnitt (7) feststellt, dass die erste elektrische Vorrichtung mit dem ersten SCART-Eingang verbunden ist.

2. Elektrische Vorrichtung nach Anspruch 1, wobei die elektrische
Verbrauchsvorrichtung (1) eine Set-Top-Box (STB) oder ein DVD-Spieler oder ein Festplattenrecorder (PVR) ist.

3. Elektrische Vorrichtung nach Anspruch 1, wobei die erste elektrische Vorrichtung ein Video-Cassetten-Recorder (VCR) oder ein DVD-Spieler ist und die zweite elektrische Vorrichtung ein Fernsehset oder eine entsprechende Vorrichtung ist.

4. Elektrische Vorrichtung nach den Ansprüchen 1 bis 3, wobei der VCR-Eingangs- und Energiesteuerungsabschnitt (7) Schaltmittel (X1) besitzt, um eine Übertragung von Energie von der Energieversorgungseinheit (8) auf den Videopuffer- und Filterabschnitt (5) zu ermöglichen, wobei die Energie abgeschaltet wird, wenn die beiden Konditionen des Standbymodus der Vorrichtung (1) und einer mangelnden Verbindung der ersten elektrischen Einheit zur gleichen Zeit vorliegen.

5. Elektrische Einheit nach Anspruch 4, wobei das Schaltmittel (X1) ein P-Kanal- MOSFET ist, dessen Basis über Widerstände (R4 und R5) mit den Kollektoren von zwei schaltenden NPN-Transistoren (Q1 und Q2) verbunden ist, deren Emitter mit der Erde verbunden ist und deren Basis entsprechend mit dem ersten SCART-Eingang und dem Standbysignal (9) verbunden ist, so dass, wenn die beiden Konditionen des Standbymodus und einer mangelnden Verbindung der zweiten elektrischen Vorrichtung zur gleichen Zeit vorliegen, sowohl Q1 als auch Q2 ausgeschaltet werden und X1 außerdem ausgeschaltet wird, sodass keine Energie an den Videopuffer- und Filterabschnitt (5) geliefert wird.

6. Elektrische Vorrichtung nach den Ansprüchen 1 bis 5, wobei die vorliegende erste elektrische Vorrichtung durch Verwendung des langsamen Austastsignals (6) (slow blank signal) erhältlich am Pin (8) der SCART-Verbindung der ersten Vorrichtung überwacht wird.

7. Verfahren zur Verringerung des Energieverbrauchs einer elektrischen Verbrauchsvorrichtung (1) mit einem Durchschleifungsmerkmal und umfassend einen Videopuffer- und Filterabschnitt zur Störsignalverbindung und anpassung an Spannungspegelspezifikationen, wobei die elektrische Verbrauchsvorrichtung (1) einen ersten und einen zweiten SCART-Eingang zur Verbindung mit einer ersten bzw. einer zweiten elektrischen Vorrichtung besitzt, umfassend die Schritte:
- Überwachen, ob die sich die elektrische Verbrauchsvorrichtung in einem Standbymodus befindet, durch Überwachen eines Standbysignals der elektrischen Verbrauchsvorrichtung (1),
- Überwachen, ob die erste elektrische Vorrichtung mit der elektrischen Verbrauchsvorrichtung (1) verbunden ist, durch Überwachen eines langsamen Austastpins (slow blank pin) des ersten SCART-Eingangs,
- Verifizieren des gleichzeitigen Vorliegens zweier Bedingungen eines Standbymodus der elektrischen Vorrichtung und einer mangelnden Verbindung der ersten elektrischen Vorrichtung,
**gekennzeichnet durch** die Schritte:
- Betätigen eines Schaltmittels zum Ausschalten der Energieversorgung an den Videopuffer- und Filterabschnitt, zur Verringerung des Energieverbrauchs der elektrischen Verbrauchsvorrichtung im Standbymode, wenn sich die elektrische Verbrauchsvorrichtung (1) im Standbymodus befindet und die erste elektrische Vorrichtung nicht zur gleichen Zeit mit dem ersten SCART-Eingang verbunden ist,
- Betätigen des Schaltmittels zum Einschalten der Energieversorgung an den Videopuffer- und Filterabschnitt, wenn die erste elektrische Vorrichtung mit dem ersten SCART-Eingang der elektrischen Verbrauchsvorrichtung (1) verbunden ist, wenn sich die elektrische Verbrauchsvorrichtung (1) im Standbymodus befindet.

8. Vorrichtung nach Anspruch 1, wobei die elektrische Verbrauchsvorrichtung (1) eine Set-Top-Box (STB) oder ein DVD-Spieler oder ein Festplattenrecorder (PVR) ist, und die zweite elektrische Vorrichtung ein Fernsehset oder eine entsprechende Vorrichtung ist.

## Revendications

1. Dispositif de consommation d'énergie électrique (1) comportant des première et seconde entrées SCART pour la connexion à un premier dispositif électrique et un second dispositif électrique respectivement, ledit dispositif de consommation d'énergie électrique (1) comprenant une unité d'alimentation en énergie électrique (8), une section de circuit de commutation audio et vidéo (4), dans lequel ladite section de circuit de commutation audio et vidéo (4) transfère des signaux de ladite première entrée SCART à une section de tampon et de filtre vidéo (5), qui est un moyen pour le couplage de bruit et pour se conformer aux spécifications de niveau de tension et est connecté à ladite seconde entrée SCART pour permettre une fonctionnalité en boucle SCART, ledit dispositif de consommation d'énergie électrique (1) comprenant en outre :
- une section d'entrée VCR et de commande d'énergie électrique (7) qui est un moyen pour surveiller le fonctionnement en mode veille dudit dispositif de consommation d'énergie électrique (1) en surveillant un signal de veille du dispositif de consommation d'énergie électrique (1) et la connexion du premier dispositif électrique en surveillant une broche « Slow Blank » de la première entrée SCART, et
**caractérisé par**
- un moyen de commutation (X1) qui éteint ladite section de tampon et de filtre vidéo (5) lorsque ladite section d'entrée VCR et de commande d'énergie électrique (7) détecte que ledit dispositif de consommation d'énergie électrique (1) est en mode veille et le premier dispositif électrique n'est pas connecté à ladite entrée SCART et qui allume ladite section de tampon et de filtre vidéo (5) lorsque ladite section d'entrée VCR et de commande d'énergie électrique (7) détecte que le premier dispositif électrique est connecté à ladite première entrée SCART.

2. Dispositif électrique selon la revendication 1, dans lequel ledit dispositif de consommation d'énergie électrique (1) est un boîtier décodeur (« Set-Top Box » ou STB) ou un lecteur DVD ou un enregistreur numérique personnel (« Personal Video Recorder » ou PVR).

3. Dispositif électrique selon la revendication 1, dans lequel ledit dispositif électrique est un magnétoscope (« Video Cassette Recorder » ou VCR) ou un lecteur DVD et ledit second dispositif électrique est un poste de télévision ou un appareil équivalent.

4. Dispositif électrique selon les revendications 1 à 3, dans lequel ladite section d'entrée VCR et de commande d'énergie électrique (7) comporte un moyen de commutation (X1) pour permettre le transfert d'énergie électrique de ladite unité d'alimentation en énergie électrique (8) à ladite section de tampon et de filtre vidéo (5), l'énergie électricité étant éteinte lorsque lesdites deux conditions de mode veille dudit dispositif (1) et de manque de connexion du premier dispositif électrique sont satisfaites en même temps.

5. Dispositif électrique selon la revendication 4, dans lequel ledit moyen de commutation (X1) est un MOSFET à canal P dont la base est connectée, par l'intermédiaire de résistances (R4 et R5), aux collecteurs de deux transistors NPN de commutation (Q1 et Q2) dont des émetteurs sont connectés à la terre et dont les bases sont respectivement connectées à la première entrée SCART et au signal de veille (9) de sorte que, lorsque lesdites deux conditions de mode veille et de manque de connexion du second dispositif électrique sont satisfaites en même temps, Q1 et Q2 seront tous les deux éteints et X1 sera éteint également de sorte qu'aucune énergie électrique n'est fournie à ladite section de tampon et de filtre vidéo (5).

6. Dispositif électrique selon les revendications 1 à 5, dans lequel la présence du premier dispositif électrique est surveillée en utilisant le signal « Slow Blank » (6) disponible à la broche 8 de la connexion SCART audit premier dispositif.

7. Procédé pour réduire la consommation d'énergie électrique d'un dispositif de consommation d'énergie électrique (1) comportant une caractéristique en boucle et comprenant une section de tampon et de filtre vidéo, qui est un moyen pour le couplage de bruit et pour se conformer aux spécifications de niveau de tension, ledit dispositif de consommation d'énergie électrique (1) comportant des première et seconde entrées SCART pour la connexion à des premier et second dispositifs électriques, respectivement, comprenant les étapes suivantes :
- surveiller si ledit dispositif de consommation d'énergie électrique est en mode veille en surveillant un signal de veille du dispositif de consommation d'énergie électrique (1),
- surveiller si ledit dispositif électrique est connecté audit dispositif de consommation d'énergie électrique (1) en surveillant une broche « Slow Blank » de la première entrée SCART
- vérifier la présence simultanée de deux conditions d'un mode veille dudit dispositif électrique et d'un manque de connexion du premier dispositif électrique et **caractérisé par** les étapes suivantes :
- si ledit dispositif de consommation d'énergie électrique (1) est en mode veille et le premier dispositif électrique n'est pas connecté à ladite première entrée SCART en même temps, actionner un moyen de commutation pour éteindre l'alimentation en énergie électrique à ladite section de tampon et de filtre vidéo, pour réduire la consommation d'énergie électrique dudit dispositif de consommation d'énergie électrique lorsqu'il est en mode veille,
- si ledit dispositif électrique est connecté à ladite première entrée SCART dudit dispositif de consommation d'énergie électrique (1) lorsque ledit dispositif de consommation d'énergie électrique (1) est en mode veille, actionner ledit moyen de commutation pour allumer l'alimentation en énergie électrique à ladite section de tampon et de filtre vidéo.

8. Dispositif selon la revendication 1, dans lequel ledit dispositif de consommation d'énergie électrique (1) est un boîtier décodeur (« Set-Top Box » ou STB) ou un lecteur DVD ou un enregistreur numérique personnel (« Personal Video Recorder » ou PVR) et ledit second dispositif électrique est un poste de télévision ou un appareil équivalent.
